# EUROPEAN PATENT APPLICATION

(11) **EP 2 658 268 A2**
(43) Date of publication of application: **30.10.2013**
(21) Application number: 13165124.2
(22) Date of filing: 24.04.2013
(51) Int. Cl.: H04N 13/00, H04N 13/04

(54) **Apparatus and method for displaying stereo-scopic image in electronic device**

(30) Priority: 25.04.2012 KR 20120043254
(71) Applicant: Samsung Electronics Co., Ltd, Gyeonggi-do 443-742 (KR)
(72) Inventor: Lee, Won-Chang, Suwon-si Gyeonggi-do (KR)
(74) Representative: Gover, Richard Paul

(57) **Abstract**

An apparatus and a method for formatting a stereoscopic image in an electronic device rotating a left image and a right image of a 2-D image by first rotation degrees in a reference direction, storing the images in the first buffer, alternately arranging the left image and the right image stored in the first buffer based on a reference size, and formatting the stereoscopic image by rotating the left image and the right image alternately arranged based on the reference size, by second rotation degrees in the reference direction.

## Description

### TECHNICAL FIELD OF THE INVENTION

The present invention relates generally to an electronic device. More particularly, the present invention relates to an apparatus and a method for displaying a stereoscopic image in an electronic device.

### BACKGROUND OF THE INVENTION

A person has two eyes, and an image of the same object seen by the left eye and an image of the same object seen by the right eye are different from each other.

An electronic device can format a stereoscopic image to create a sense of depth for a user by means of stereopsis for binocular vision. For example, with respect to the same object, the electronic device captures a left image corresponding to the left viewpoint and a right image corresponding to the right viewpoint using a camera. Next, the electronic device alternately arranges the left image and the right image based on a vertical column or a horizontal column so that the left eye and the right eye of the human form different images, and thus formats the stereoscopic image to create the illusion of depth for the user. Herein, the vertical column unit indicates a vertical column for one or more pixels of a horizontal resolution of the image. The horizontal column unit indicates a horizontal column for one or more pixels of a vertical resolution of the image. Stereoscopy uses this simple computation of two slightly different images. Each eye of the viewer is provided with separate image information, so that a pair of 2D images can create an image of three-dimensionality and the illusion of depth.

As discussed above, the electronic device can format the stereoscopic image by alternately arranging the left image and the right image of the same object based on the vertical column or the horizontal column. However, the electronic device must use a hardware formatter for alternately arranging the left image and the right image based on the vertical column or the horizontal column.

Accordingly, when a stereoscopic image service is provided, the electronic device requires an additional cost and an additional mounting space for the hardware formatter to format the stereoscopic image.

### SUMMARY OF THE INVENTION

The present invention addresses the above discussed deficiencies of the prior art and provides additional advantages, by providing an apparatus and a method for providing a stereoscopic image service in an electronic device.

Another aspect of the present invention is to provide an apparatus and a method for formatting a stereoscopic image in an electronic device.

Yet another aspect of the present invention is to provide an apparatus and a method for formatting a stereoscopic image without using a separate hardware formatter in an electronic device.

Still another aspect of the present invention is to provide an apparatus and a method for formatting a stereoscopic image using a Direct Memory Access (DMA) feature and a rotation function in an electronic device.

A further aspect of the present invention is to provide an apparatus and a method for formatting a stereoscopic image using a Direct Memory Access (DMA) feature and a data resize function in an electronic device.

According to one aspect of the present invention, a method for formatting a stereoscopic image in an electronic device includes rotating a left image and a right image of image data by first rotation degrees in a reference direction, and storing the images in the first buffer; alternately arranging the left image and the right image stored in the first buffer, based on a reference size; and formatting the stereoscopic image by rotating the left image and the right image alternately arranged based on the reference size, by second rotation degrees in the reference direction.

According to another aspect of the present invention, a method for formatting a stereoscopic image in an electronic device includes resizing and storing a left image and a right image of image data in a first buffer; and formatting the stereoscopic image by alternately arranging the left image and the right image stored in the first buffer, based on a reference size.

According to yet another aspect of the present invention, an electronic device includes one or more processors; a memory; and one or more programs stored in the memory and configured for execution by the processors. The program includes one or more instructions for rotating a left image and a right image of image data by first rotation degrees in a reference direction, storing the images in the first buffer, alternately arranging the left image and the right image stored in the first buffer based on a reference size, and formatting the stereoscopic image by rotating the left image and the right image alternately arranged based on the reference size, by second rotation degrees in the reference direction.

According to still another aspect of the present invention, an electronic device includes one or more processors; a memory; and one or more programs stored in the memory and configured for execution by the processors. The program includes one or more instructions for resizing and storing a left image and a right image of image data in a first buffer, and formatting the stereoscopic image by alternately arranging the left image and the right image stored in the first buffer, based on a reference size.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 illustrates an electronic device according to an exemplary embodiment of the present invention;

FIG. 2 illustrates a method for formatting a barrier-type stereoscopic image in the electronic device according to an exemplary embodiment of the present invention;

FIGS. 3A through 3D illustrate a barrier-type LR stereoscopic image formatted using a LR graphic image according to an exemplary embodiment of the present invention;

FIGS. 4A, 4B, 4C, and 4D illustrate a barrier-type LR stereoscopic image formatted using the LR graphic image according to another exemplary embodiment of the present invention;

FIGS. 5A, 5B, 5C, and 5D illustrate a barrier-type RL stereoscopic image formatted using a RL graphic image according to another exemplary embodiment of the present invention;

FIGS. 6A, 6B, 6C, and 6D illustrate a barrier-type RL stereoscopic image formatted using the RL graphic image according to another exemplary embodiment of the present invention;

FIGS. 7A, 7B, 7C, and 7D illustrate a barrier-type RL stereoscopic image formatted using the LR graphic image according to another exemplary embodiment of the present invention;

FIGS. 8A, 8B, 8C and 8D illustrate a barrier-type RL stereoscopic image formatted using the LR graphic image according to another exemplary embodiment of the present invention;

FIGS. 9A, 9B, 9C, and 9D illustrate a barrier-type LR stereoscopic image formatted using the RL graphic image according to another exemplary embodiment of the present invention;

FIGS. 10A, 10B, 10C, and 10D illustrate a barrier-type LR stereoscopic image formatted using the RL graphic image according to another exemplary embodiment of the present invention;

FIG. 11 illustrates a method for formatting an interlaced stereoscopic image in the electronic device according to another exemplary embodiment of the present invention;

FIGS. 12A, 12B, and 12C illustrate an interlaced LR stereoscopic image formatted using the LR graphic image according to another exemplary embodiment of the present invention;

FIGS. 13A, 13B, and 13C illustrate an interlaced LR stereoscopic image formatted using the LR graphic image according to another exemplary embodiment of the present invention;

FIGS. 14A, 14B, and 14C illustrate an interlaced RL stereoscopic image formatted using the RL graphic image according to another exemplary embodiment of the present invention;

FIGS. 15A, 15B, and 15C illustrate an interlaced RL stereoscopic image formatted using the RL graphic image according to another exemplary embodiment of the present invention;

FIGS. 16A, 16B, and 16C illustrate an interlaced RL stereoscopic image formatted using the LR graphic image according to another exemplary embodiment of the present invention;

FIGS. 17A, 17B, and 17C illustrate an interlaced RL stereoscopic image formatted using the LR graphic image according to another exemplary embodiment of the present invention;

FIGS. 18A, 18B, and 18C illustrate an interlaced LR stereoscopic image formatted using the RL graphic image according to another exemplary embodiment of the present invention; and

FIGS. 19A, 19B, and 19C illustrate an interlaced LR stereoscopic image formatted using the RL graphic image according to another exemplary embodiment of the present invention.

Throughout the drawings, like reference numerals will be understood to refer to like parts, components and structures.

### DETAILED DESCRIPTION OF THE INVENTION

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments of the present invention provide a technique for formatting a stereoscopic image without having to use a separate hardware module in an electronic device.

Hereinafter, the electronic device can employ devices capable of playing a stereoscopic image such as portable electronic device, portable terminal, mobile terminal, mobile pad, media player, Personal Digital Assistant (PDA), desktop computer, laptop computer, smart phone, netbook, television, Mobile Internet Device (MID), Ultra Mobile Personal Computer (UMPC), tablet PC, smart TV, wrist watch, digital camera, navigation system, MP3 player, eye ware, and any duplex systems. The electronic device may be an electronic device combining two or more functions of those devices.

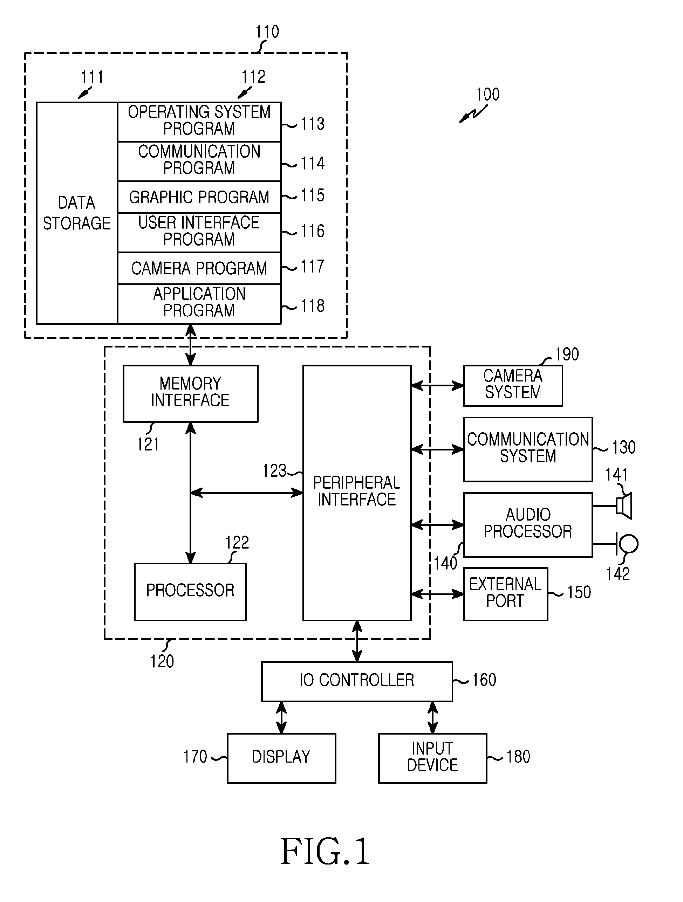

FIG. 1 is a block diagram of an electronic device according to an exemplary embodiment of the present invention.

As shown in FIG. 1, the electronic device 100 includes a memory 110, a processor unit 120, a communication system 130, an audio processor 140, an external port 150, an Input Output (IO) controller 160, a display 170, an input device 180, and a camera system 190. Herein, a plurality of memories 110, a plurality of communication systems 130, and a plurality of external ports 150 may be provided.

It should be noted that the components shown in FIG. 1 along with the accompanying text, provide an enabling description of at least one preferred embodiment of the present invention. As one of average skill in the art will further appreciate, other embodiments may be readily derived from the teachings of the present invention without deviating from the spirit of the present invention.

The memory 110 can include a data storage 111 for storing data generating in program execution, and a program storage 112 for storing a program to control operations of the electronic device 100.

The data storage 111 includes a plurality of buffers for formatting the stereoscopic image.

The program storage 112 include an operating system program 113, a communication program 114, a graphic program 115, a user interface program 116, a camera program 117, and at least one application program 118. The program in the program storage 112 may be referred to as an instruction set which is a set of instructions.

The operating system program 113 includes at least one software component for controlling general system operations. The operating system program 113 processes normal communication between various hardware devices and the software components.

The communication program 114 includes at least one software component for processing data transmitted and received through the communication program 130 or the external port 150.

The graphic program 115 includes at least one software component for providing and displaying graphics on the display 170.

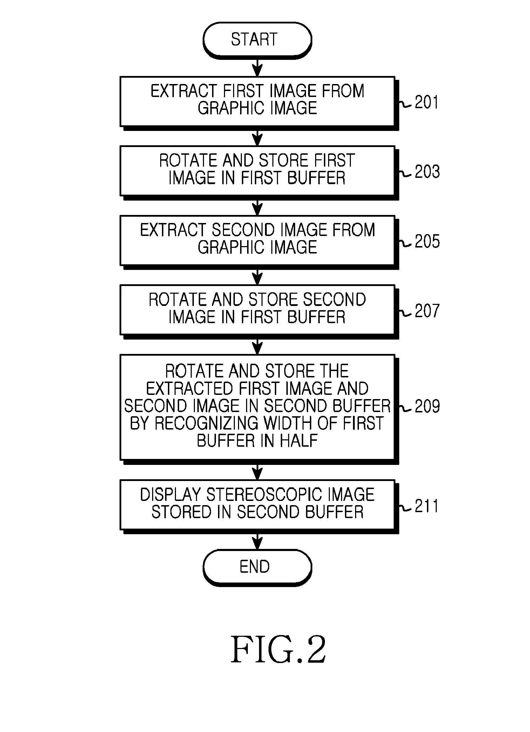

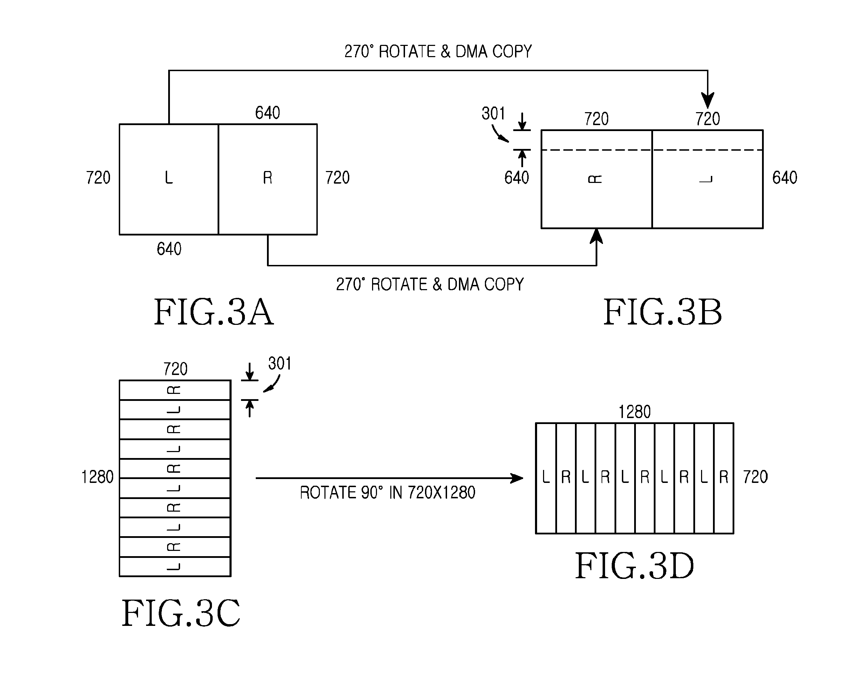

The graphic program 115 includes a software component for formatting the stereoscopic image using graphic images stored in the memory 110 so as to provide the stereoscopic image service. For example, the graphic program 115 includes instructions for extracting a first image and a second image from the graphic image using a Direct Memory Access (DAM) feature, rotating the images using a rotation function, and storing the images in the first buffer as shown in FIG. 2. In so doing, the first buffer stores the rotated first and second images as shown in FIGS. 3B, 4B, 5B, 6B, 7B, 8B, 9B, and 10B. Next, the graphic program 115 includes instructions for alternately arranging the first image and the second image rotated and stored in the first buffer, based on a reference unit, and storing the stereoscopic images rotated and formatted using the rotation function in the second buffer. In so doing, when recognizing a width of the first buffer in half, the graphic program 115 can alternately arrange the first image and the second image stored in the first buffer, based on the reference unit as shown in FIGS. 3C, 4C, 5C, 6C, 7C, 8C, 9C and 10C. The second buffer stores the stereoscopic images as shown in FIGS. 3D, 4D, 5D, 6D, 7D, 8D, 9D, and 10D. Hence, the first buffer can be constructed in the same size (e.g., resolution) as the display 170, and the width of the second buffer can be half of the width of the display 170. Herein, the reference unit indicates a unit for alternately arranging the first image and the second image for the stereoscopic image.

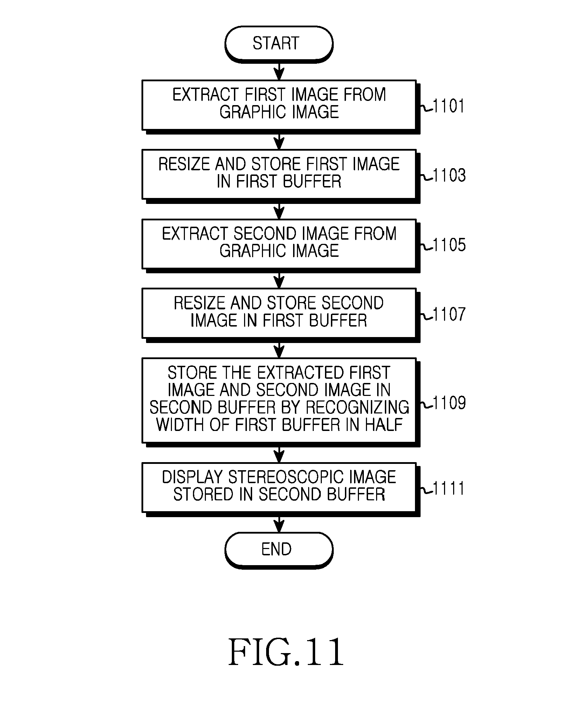

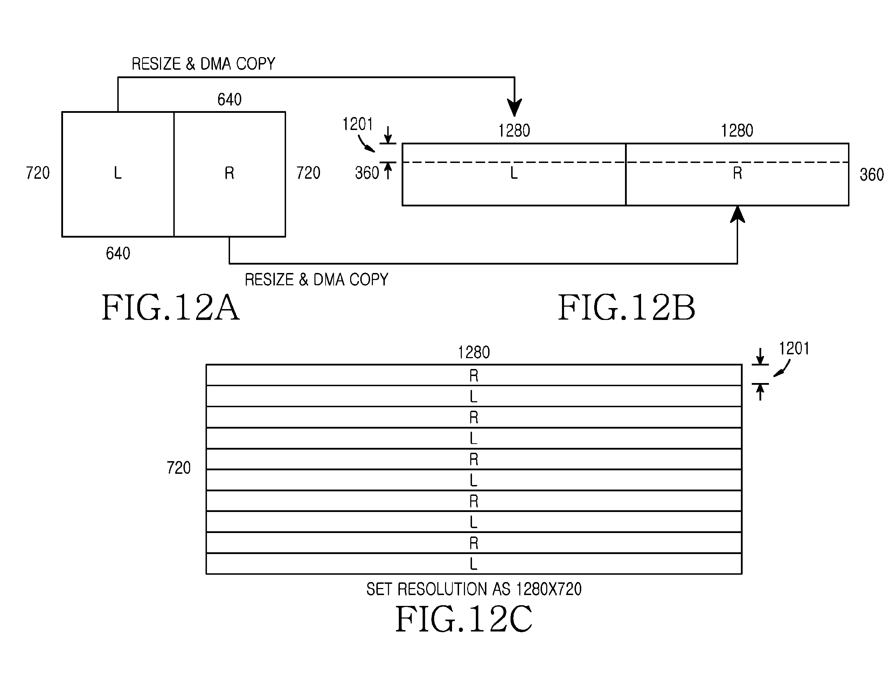

For example, the graphic program 115 includes instructions for extracting the first image and the second image from the graphic image using the DAM feature, resizing the extracted first and second images, and storing the images in the first buffer as shown in FIG. 11. In so doing, the first buffer stores the resized first and second images as shown in FIGS. 12B, 13B, 14B, 15B, 16B, 17B, 18B, and 19B. Next, the graphic program 115 includes instructions for storing the stereoscopic images formatted by alternately arranging the first image and the second image resized and stored in the first buffer based on a reference unit, in the second buffer. In so doing, when recognizing the width of the first buffer in half, the graphic program 115 can alternately arrange the first image and the second image stored in the first buffer based on the reference unit as shown in FIGS. 12C, 13C, 14C, 15C, 16C, 17C, 18C and 19C. The second buffer stores the stereoscopic images as shown in FIGS. 12C, 13C, 14C, 15C, 16C, 17C, 18C and 19C.

The graphic program 115 includes at least one software component for displaying the formatted stereoscopic image.

The user interface program 116 includes at least one software component relating to a user interface.

The camera program 117 includes camera related software components for camera related processes and functions. For example, the camera program 117 includes an instruction for capturing the left image and the right image through the camera system 190 to format the stereoscopic image.

The application program 118 includes a software component for at least one application program installed in the electronic device 100.

The processor unit 120 can include a memory interface 121, at least one processor 122, and a peripheral interface 123. Herein, the memory interface 121, the at least one processor 122, and the peripheral interface 123 of the processor unit 120 can be integrated onto at least one integrated circuit or embodied separately.

The memory interface 121 controls the access of the component such as processor 122 or peripheral interface 123, to the memory 110.

The peripheral interface 123 controls connections between an IO peripheral of the electronic device 100, and the processor 122 and the memory interface 121.

The processor 122 controls the electronic device 100 to provide various services such as voice communication and data communication using at least one software program. The processor 122 executes the at least one software program stored in the memory 110 and thus controls to provide the service corresponding to the software program. For example, the processor 122 controls to provide the stereoscopic image service by formatting the stereoscopic image by executing the graphic program 115.

The communication system 130 processes voice communication and data communication of the electronic device 100. The communication system 130 may include a plurality of communication submodules for supporting different communication networks. For example, the communication network includes, but not limited to, a Global System for Mobile communication (GSM) network, an Enhanced Data GSM Environment (EDGE) network, a Code Division Multiple Access (CDMA) network, a W-CDMA network, a Long Term Evolution (LTE) network, an Orthogonal Frequency Division Multiple Access (OFDMA) network, a wireless Local Area Network (LAN), a Bluetooth network, and Near Field Communication (NFC).

The audio processor 140 provides an audio interface between the user and the electronic device 100 through a speaker 141 and a microphone 142.

The external port 150 includes a connection interface for connecting the electronic device 100 to an external electronic device directly or over the network. For example, the external port 150 can include, for example, but not limited to, a Universal Serial Bus (USB) port, a High Definition Multimedia Interface (HDMI) port, and a FIREWIRE port.

The IO controller 160 provides an interface between the IO device such as display 170 and input device 180, and the peripheral interface 123. For example, the IO controller 160 controls to output the stereoscopic image stored in the second buffer of the data storage 111, to the display 170 according to the graphic program 115.

The display 170 displays status information of the electronic device 100, a character input by the user, a moving picture, and a still picture under control of the graphic program 115. When the display 170 includes a touch screen, the display 170 provides touch information of the touch screen to the processor module 120 via the IO controller 160.

The input device 180 provides input data generated by a user's selection to the processor unit 120 through the IO controller 160. For example, the input device 180 includes only a control button to control the electronic device 100. For example, the input device 180 may include a keypad for receiving the input data from the user.

The camera system 190 can capture moving picture data and still picture data. For example, the camera system 190 includes one or more camera submodules and thus obtains the left image and the right image required to format the stereoscopic image.

In this exemplary embodiment, the second buffer containing the stereoscopic image is included in the data buffer 111 of the memory 110. Alternatively, the second buffer containing the stereoscopic image may be included in the display 170.

FIG. 2 illustrates a method for formatting a barrier-type stereoscopic image in the electronic device according to an exemplary embodiment of the present invention.

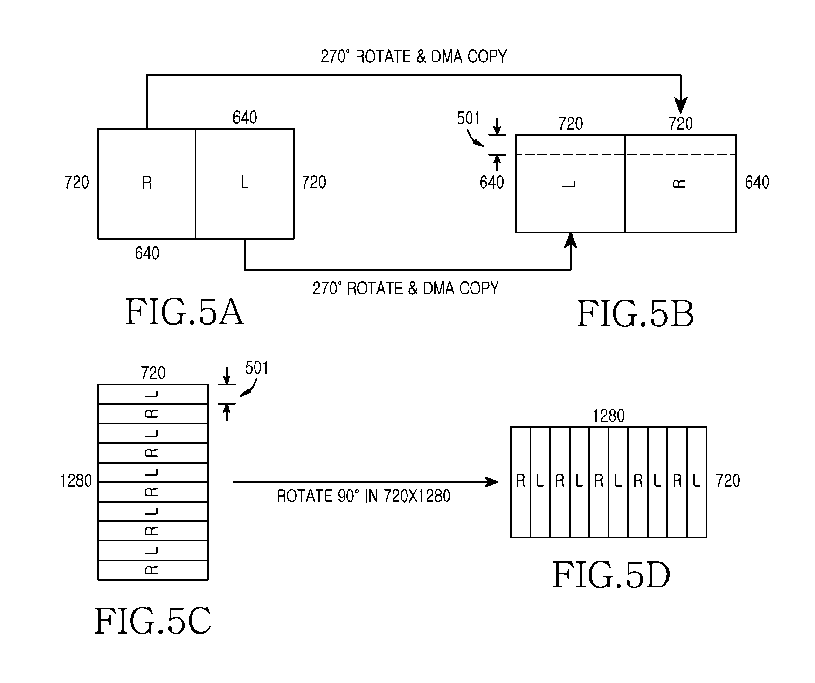

Referring to FIG. 2, the electronic device extracts the first image from the graphic image in step 201. For example, the graphic image includes the left image L and the right image R as shown in FIG. 3A. When formatting the LR stereoscopic image as shown in FIGS. 3A through 3D, the electronic device extracts the right image being the first image from the graphic image using the Direct Memory Access (DMA). By contrast, when formatting the RL stereoscopic image as shown in FIGS. 5A through 5D, the electronic device extracts the left image being the first image from the graphic image using the DMA.

In step 203, the electronic device rotates the first image extracted from the graph image in a predetermined reference direction and stores the rotated image in the first buffer. For example, the electronic device rotates the right image being the first image of the graphic image 270° clockwise as shown in FIG. 3B and stores the rotated image in the first buffer.

In step 205, the electronic device extracts the second image from the graphic image. For example, when formatting the LR stereoscopic image as shown in FIGS. 3A through 3D, the electronic device extracts the left image being the second image from the graphic image using the DMA. By contrast, when formatting the RL stereoscopic image as shown in FIGS. 5A through 5D, the electronic device extracts the right image being the second image from the graphic image using the DMA.

In step 207, the electronic device rotates the second image extracted from the graph image in the reference direction and stores the rotated image in the first buffer. For example, the electronic device rotates the left image being the second image of the graphic image 270° clockwise as shown in FIG. 3B using FIMC driver, for example, and stores the rotated image in the first buffer.

In step 209, the electronic device may recognize that the first image and the second image stored in the first buffer may be alternately arranged, based on a predetermined reference unit, rotates the images in the reference direction, and stores the images in the second buffer. For example, when the electronic device may recognize that the width of the first buffer is reduced in half, the electronic device may recognizes that the first image and the second image of the first buffer are alternately arranged based on a reference unit 301 as shown in FIG. 3C. Hence, the electronic device rotates the first image and the second image which are alternately arranged based on the reference unit 301 and stored in the first buffer, 90° clockwise and stores the images in the second buffer. Herein, the reference unit indicates the unit for alternately arranging the first image and the second image for the stereoscopic image. Data stored in the second buffer is referred to as the stereoscopic image.

In step 211, the electronic device outputs the stereoscopic image stored in the second buffer, to the display 170.

Next, the electronic device finishes the process for formatting the stereoscopic image.

In this exemplary embodiment, the electronic device rotates and stores the first image in the first buffer in steps 201 and 203, and then rotates and stores the second image in the first buffer in steps 205 and 207. In so doing, the electronic device may rotate and store the first image and the second image in the first buffer simultaneously.

In an alternate embodiment, before rotating and storing the first image and the second image in the first buffer, the electronic device can resize the first image and the second image by considering the resolution of the display 170 which displays the stereoscopic image. For example, the electronic device resizes the graphic image by taking into account the resolution of the display 170 for displaying the stereoscopic image. In so doing, the electronic device may resize the first image and the second image of the graphic image. Then, the electronic device can rotate and store the resized first image and second image in the first buffer.

Now, constructions for formatting the barrier-type stereoscopic image in the electronic device are elucidated.

FIGS. 3A through 3D depict the barrier-type LR stereoscopic image using the LR graphic image according to one exemplary embodiment of the present invention.

It is assumed that the data storage 111 of the memory 110 includes the graphic image sequentially including the left image L and the right image R side by side as shown in FIG. 3A. Herein, the graphic image sequentially including the left image L and the right image R side by side is referred to as the LR graphic image.

To format the LR stereoscopic image using the LR graphic image, the electronic device extracts the right image from the graphic image, rotates the right image 270° clockwise, and stores the rotated image in the first buffer as shown in FIG. 3B. Next, the electronic device extracts the left image from the graphic image, rotates the left image 270° clockwise, and stores the rotated image in the first buffer as shown in FIG. 3B.

When electronic device may recognize the width of the first buffer is reduced in half, the electronic device may recognize that the right image and the left image of the first buffer are alternately arranged based on the reference unit 301 as shown in FIG. 3C. Thereafter, the electronic device rotates the right image and the left image alternately arranged based on the reference unit 301 90° clockwise as shown in FIG. 3C, and thus formats the LR stereoscopic image of FIG. 3D.

In this exemplary embodiment, the electronic device formats the LR stereoscopic image using the graphic image sequentially including the left image and the right image side by side without using a hardware formatter.

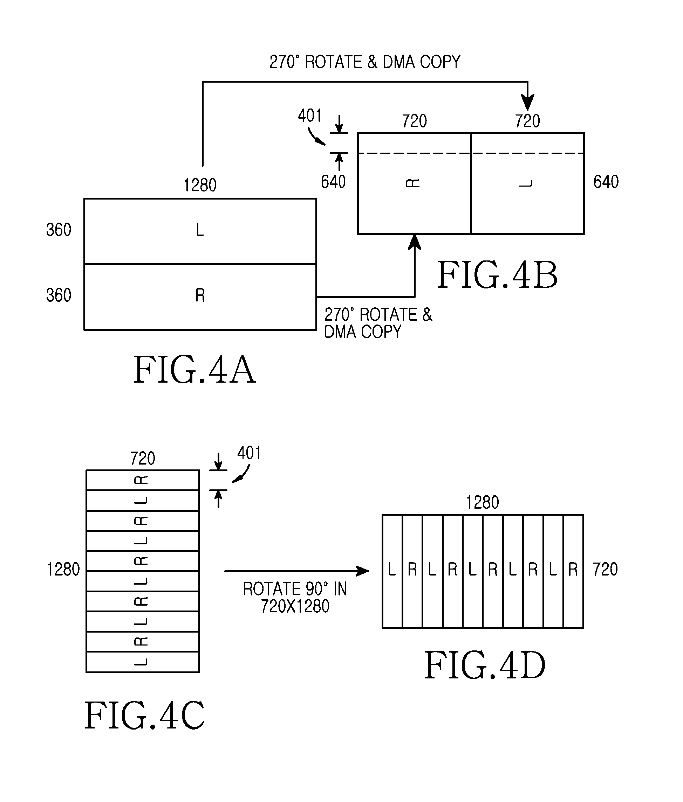

Alternatively, the electronic device may format the LR stereoscopic image using the graphic image sequentially including the left image and the right image between top and bottom as shown in FIGS. 4A through 4D.

FIGS. 4A through 4D depict the barrier-type LR stereoscopic image using the LR graphic image according to another exemplary embodiment of the present invention.

It is assumed that the data storage 111 of the memory 110 includes the graphic image sequentially including the left image L and the right image R between top and bottom as shown in FIG. 4A. Herein, the graphic image sequentially including the left image L and the right image R between top and bottom is referred to as the LR graphic image.

To format the LR stereoscopic image using the LR graphic image, the electronic device extracts the right image from the graphic image, rotates the right image 270° clockwise, and stores the rotated image in the first buffer as shown in FIG. 4B. Next, the electronic device extracts the left image from the graphic image, rotates the left image 270° clockwise, and stores the rotated image in the first buffer as shown in FIG. 4B. Here, the electronic device resizes the right image and the left image by considering the resolution of the display 170 for displaying the stereoscopic image.

When electronic device may recognize the width of the first buffer is reduced in half, the electronic device may recognize that the right image and the left image of the first buffer are alternately arranged based on a reference unit 401 as shown in FIG. 4C. Thereafter, the electronic device rotates the right image and the left image alternately arranged based on the reference unit 401 90° clockwise as shown in FIG. 4C, and thus formats the LR stereoscopic image of FIG. 4D.

In this another exemplary embodiment, the electronic device formats the LR stereoscopic image using the LR graphic image.

Alternatively, the electronic device may format the RL stereoscopic image using the RL graphic image as shown in FIGS. 5A through 5D.

FIGS. 5A through 5D depict the barrier-type RL stereoscopic image formatted using the RL graphic image according to another exemplary embodiment of the present invention.

It is assumed that the data storage 111 of the memory 110 includes the graphic image sequentially including the right image R and the left image L side by side as shown in FIG. 5A. Herein, the graphic image sequentially including the right image R and the left image L side by side is referred to as the RL graphic image.

To format the RL stereoscopic image using the RL graphic image, the electronic device extracts the left image from the graphic image, rotates the left image 270° clockwise, and stores the rotated image in the first buffer as shown in FIG. 5B. Next, the electronic device extracts the right image from the graphic image, rotates the right image 270° clockwise, and stores the rotated image in the first buffer as shown in FIG. 5B.

When electronic device may recognize the width of the first buffer is reduced in half, the electronic device may recognize that the left image and the right image of the first buffer are alternately arranged based on a reference unit 501 as shown in FIG. 5C. Accordingly, the electronic device rotates the left image and the right image alternately arranged based on the reference unit 501 90° clockwise as shown in FIG. 5C, and thus formats the RL stereoscopic image of FIG. 5D.

In this exemplary embodiment, the electronic device formats the RL stereoscopic image using the graphic image sequentially including the right image and the left image side by side.

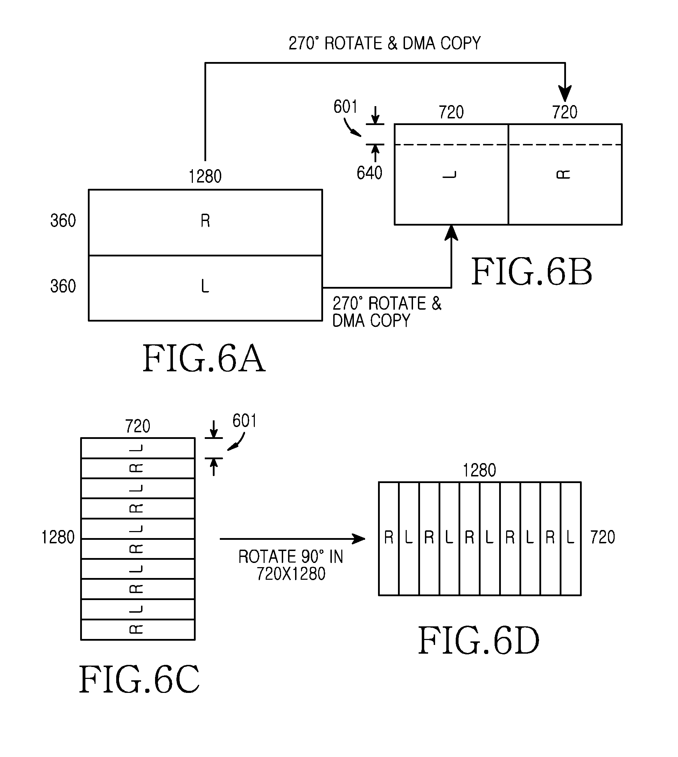

Alternatively, the electronic device may format the RL stereoscopic image using the graphic image sequentially including the right image and the left image between top and bottom as shown in FIGS. 6A through 6D.

FIGS. 6A through 6D depicts the barrier-type RL stereoscopic image formatted using the RL graphic image according to another exemplary embodiment of the present invention.

It is assumed that the data storage 111 of the memory 110 includes the graphic image sequentially including the right image R and the left image L between top and bottom as shown in FIG. 6A. Herein, the graphic image sequentially including the right image R and the left image L between top and bottom is referred to as the RL graphic image.

To format the RL stereoscopic image using the RL graphic image, the electronic device extracts the left image from the graphic image, rotates the left image 270° clockwise, and stores the rotated image in the first buffer as shown in FIG. 6B. Next, the electronic device extracts the right image from the graphic image, rotates the right image 270° clockwise, and stores the rotated image in the first buffer as shown in FIG. 6B. Here, the electronic device resizes the left image and the right image by considering the resolution of the display 170 for displaying the stereoscopic image.

When electronic device may recognize the width of the first buffer is reduce in half, the electronic device may recognize that the left image and the right image of the first buffer are alternately arranged based on a reference unit 601 as shown in FIG. 6C. Accordingly, the electronic device rotates the left image and the right image alternately arranged based on the reference unit 601 90° clockwise as shown in FIG. 6C, and thus formats the RL stereoscopic image of FIG. 6D.

In this another exemplary embodiment, the electronic device formats the RL stereoscopic image using the RL graphic image.

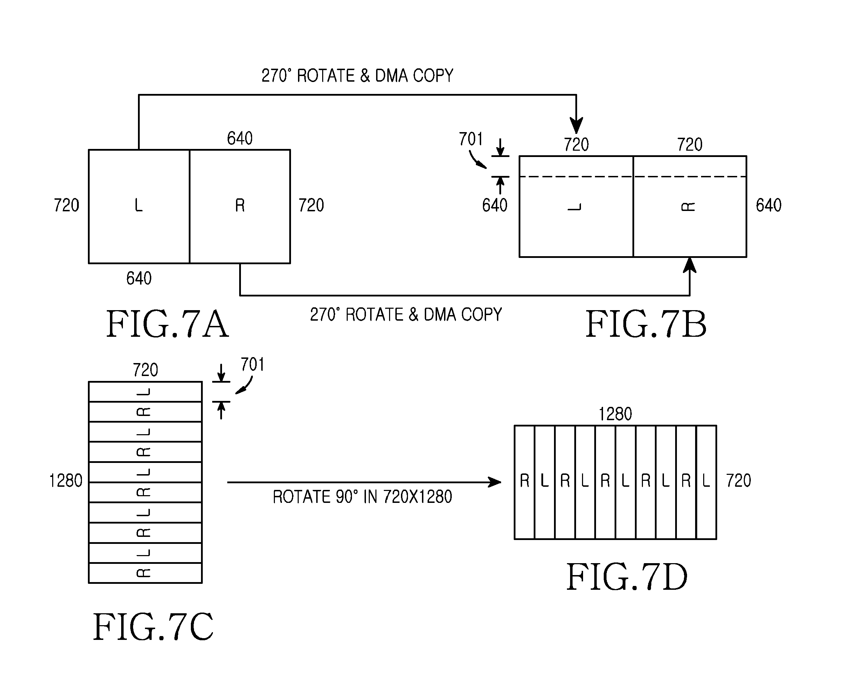

Alternatively, the electronic device may format the RL stereoscopic image using the LR graphic image as shown in FIGS. 7A through 7D.

FIGS. 7A through 7D depict the barrier-type RL stereoscopic image formatted using the LR graphic image according to another exemplary embodiment of the present invention.

It is assumed that the data storage 111 of the memory 110 includes the graphic image sequentially including the left image L and the right image R side by side as shown in FIG. 7A. Herein, the graphic image sequentially including the left image L and the right image R side by side is referred to as the LR graphic image.

To format the RL stereoscopic image using the LR graphic image, the electronic device extracts the left image from the graphic image, rotates the left image 270° clockwise, and stores the rotated image in the first buffer as shown in FIG. 7B. Next, the electronic device extracts the right image from the graphic image, rotates the right image 270° clockwise, and stores the rotated image in the first buffer as shown in FIG. 7B.

When electronic device may recognize the width of the first buffer is reduce in half, the electronic device may recognizes that the left image and the right image of the first buffer are alternately arranged based on a reference unit 701 as shown in FIG. 7C. Accordingly, the electronic device rotates the left image and the right image alternately arranged based on the reference unit 701 90° clockwise as shown in FIG. 7C, and thus formats the RL stereoscopic image of FIG. 7D.

In this exemplary embodiment, the electronic device formats the RL stereoscopic image using the graphic image sequentially including the left image and the right image side by side.

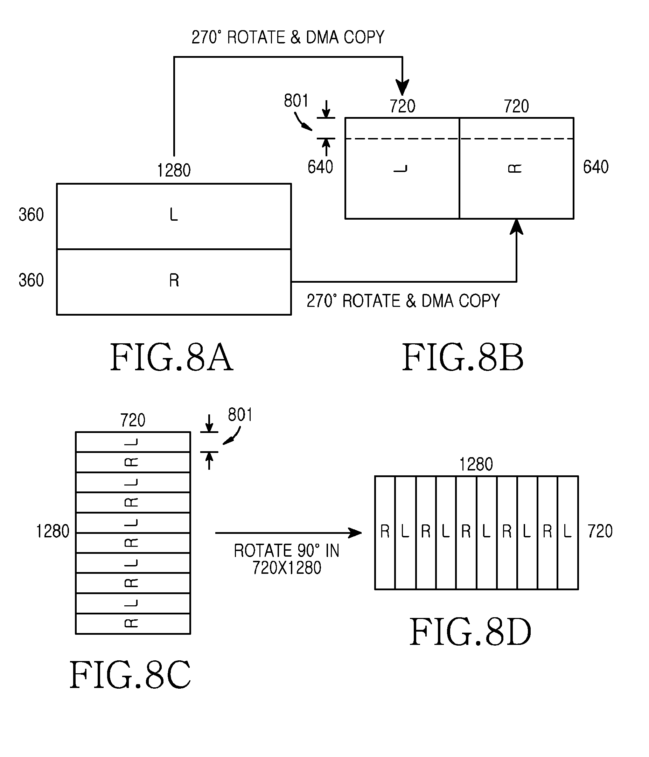

Alternatively, the electronic device may format the RL stereoscopic image using the graphic image sequentially including the left image and the right image between top and bottom as shown in FIGS. 8A through 8D.

FIGS. 8A through 8D depict the barrier-type RL stereoscopic image formatted using the LR graphic image according to another exemplary embodiment of the present invention.

It is assumed that the data storage 111 of the memory 110 includes the graphic image sequentially including the left image L and the right image R between top and bottom as shown in FIG. 8A. Herein, the graphic image sequentially including the left image L and the right image R between top and bottom is referred to as the LR graphic image.

To format the RL stereoscopic image using the LR graphic image, the electronic device extracts the left image from the graphic image, rotates the left image 270° clockwise, and stores the rotated image in the first buffer as shown in FIG. 8B. Next, the electronic device extracts the right image from the graphic image, rotates the right image 270° clockwise, and stores the rotated image in the first buffer as shown in FIG. 8B. In so doing, the electronic device resizes the left image and the right image by considering the resolution of the display 170 for displaying the stereoscopic image.

When electronic device may recognize the width of the first buffer is reduce in half, the electronic device may recognize that the left image and the right image of the first buffer are alternately arranged based on a reference unit 801 as shown in FIG. 8C. Accordingly, the electronic device rotates the left image and the right image alternately arranged based on the reference unit 801 90° clockwise as shown in FIG. 8C, and thus formats the RL stereoscopic image of FIG. 8D.

In this another exemplary embodiment, the electronic device formats the RL stereoscopic image using the LR graphic image.

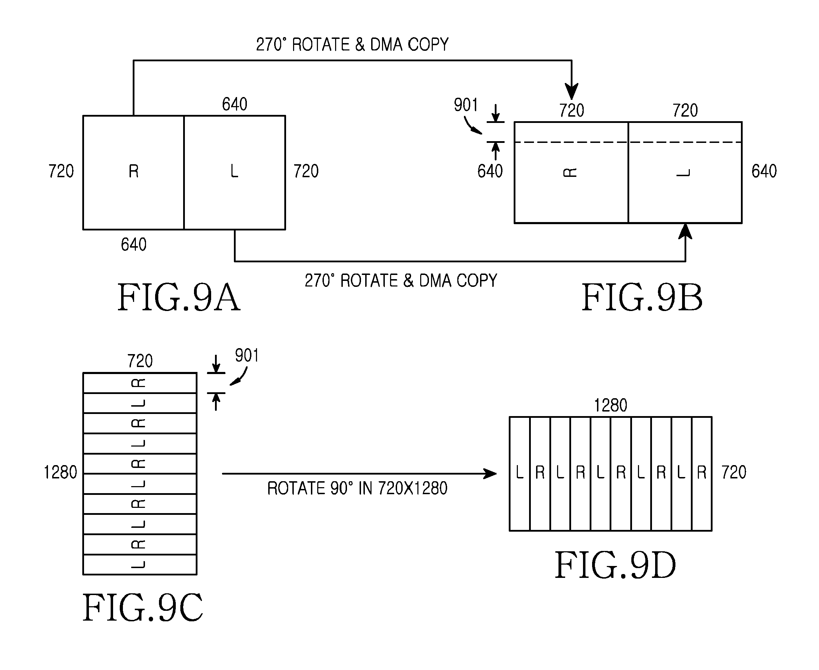

Alternatively, the electronic device may format the LR stereoscopic image using the RL graphic image as shown in FIGS. 9A through 9D.

FIGS. 9A through 9D depict the barrier-type LR stereoscopic image formatted using the RL graphic image according to another exemplary embodiment of the present invention.

It is assumed that the data storage 111 of the memory 110 includes the graphic image sequentially including the right image R and the left image L side by side as shown in FIG. 9A. Herein, the graphic image sequentially including the right image R and the left image L side by side is referred to as the RL graphic image.

To format the LR stereoscopic image using the RL graphic image, the electronic device extracts the right image from the graphic image, rotates the right image 270° clockwise, and stores the rotated image in the first buffer as shown in FIG. 9B. Next, the electronic device extracts the left image from the graphic image, rotates the left image 270° clockwise, and stores the rotated image in the first buffer as shown in FIG. 9B.

When electronic device may recognize the width of the first buffer is reduce in half, the electronic device may recognize that the right image and the left image of the first buffer are alternately arranged based on a reference unit 901 as shown in FIG. 9C. Accordingly, the electronic device rotates the right image and the left image alternately arranged based on the reference unit 901 90° clockwise as shown in FIG. 9C, and thus formats the LR stereoscopic image of FIG. 9D.

In this exemplary embodiment, the electronic device formats the LR stereoscopic image using the graphic image sequentially including the right image and the left image side by side.

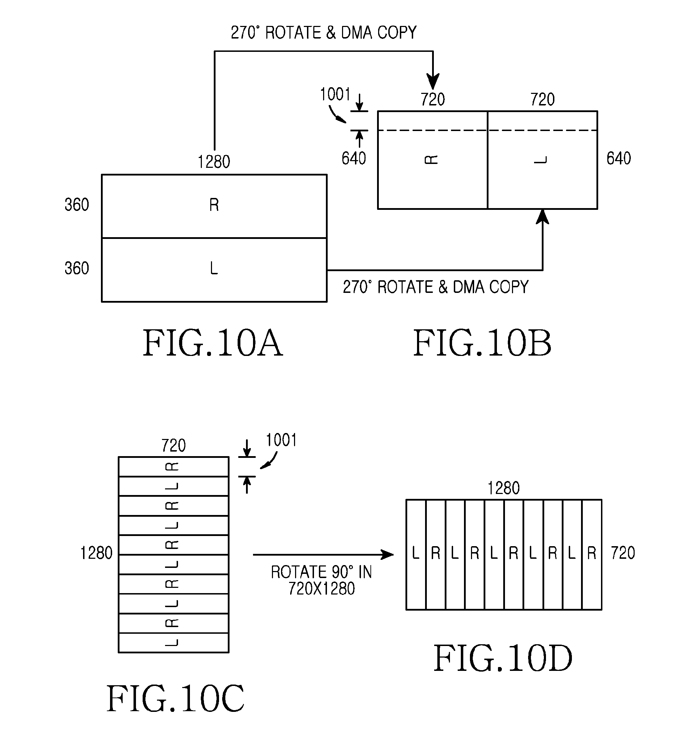

Alternatively, the electronic device may format the LR stereoscopic image using the graphic image sequentially including the right image and the left image between top and bottom as shown in FIGS. 10A through 10D.

FIGS. 10A through 10D depict the barrier-type LR stereoscopic image using the RL graphic image according to another exemplary embodiment of the present invention.

It is assumed that the data storage 111 of the memory 110 includes the graphic image sequentially including the right image R and the left image L between top and bottom as shown in FIG. 10A. Herein, the graphic image sequentially including the right image R and the left image L between top and bottom is referred to as the RL graphic image.

To format the LR stereoscopic image using the RL graphic image, the electronic device extracts the right image from the graphic image, rotates the right image 270° clockwise, and stores the rotated image in the first buffer as shown in FIG. 10B. Next, the electronic device extracts the left image from the graphic image, rotates the left image 270° clockwise, and stores the rotated image in the first buffer as shown in FIG. 10B. In so doing, the electronic device resizes the right image and the left image by considering the resolution of the display 170 for displaying the stereoscopic image.

When electronic device may recognize the width of the first buffer is reduce in half, the electronic device may recognize that the right image and the left image of the first buffer are alternately arranged based on a reference unit 1001 as shown in FIG. 10C. Accordingly, the electronic device rotates the right image and the left image alternately arranged based on the reference unit 1001, 90° clockwise as shown in FIG. 10C, and thus formats the LR stereoscopic image of FIG. 10D.

In this another exemplary embodiment, the electronic device formats the barrier-type stereoscopic image.

Alternatively, the electronic device may format an interlaced stereoscopic image as shown in FIG. 11.

FIG. 11 illustrates a method for formatting the interlaced stereoscopic image in the electronic device according to another exemplary embodiment of the present invention.

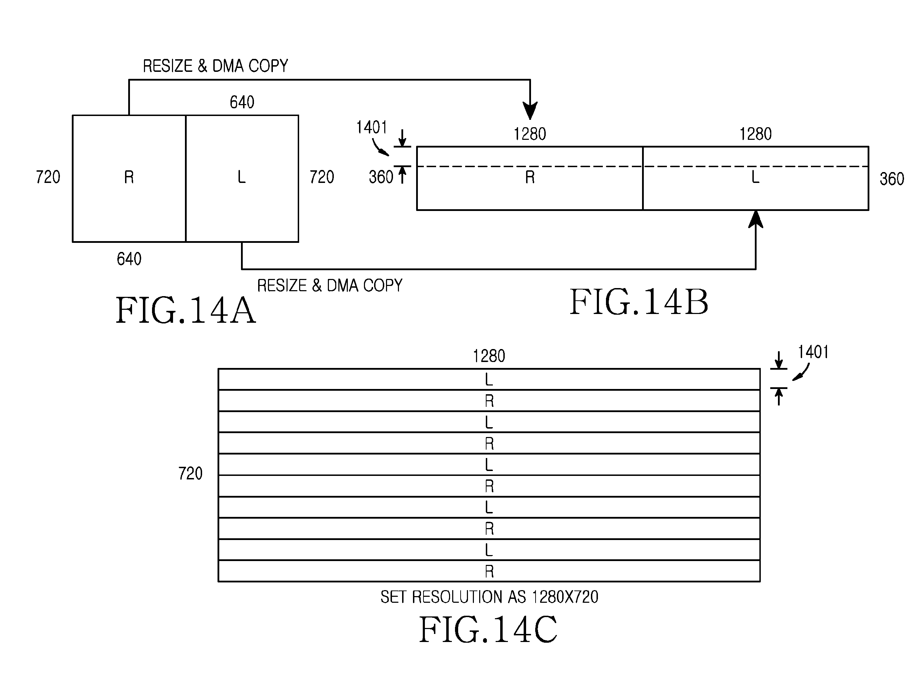

Referring to FIG. 11, the electronic device extracts the first image from the graphic image in step 1101. For example, the graphic image includes the left image L and the right image R as shown in FIG. 12A. When formatting the LR stereoscopic image as shown in FIGS. 12A, 12B and 12C, the electronic device extracts the left image being the first image from the graphic image using the DMA. By contrast, when formatting the RL stereoscopic image as shown in FIGS. 14A, 14B and 14C, the electronic device extracts the right image being the first image from the graphic image using the DMA.

In step 1103, the electronic device resizes and stores the first image extracted from the graph image in the first buffer. For example, the electronic device stores the image in the first buffer by doubling the width of the left image being the first image of the graphic image and halving the height of the left image as shown in FIG. 12B according to resolution of the electronic device.

In step 1105, the electronic device extracts the second image from the graphic image. For example, when formatting the LR stereoscopic image as shown in FIGS. 12A, 12B and 12C, the electronic device extracts the right image being the second image from the graphic image using the DMA. By contrast, when formatting the RL stereoscopic image as shown in FIGS. 14A, 14B and 14C, the electronic device extracts the left image being the second image from the graphic image using the DMA.

In step 1107, the electronic device resizes the second image extracted from the graph image and stores the resized image in the first buffer. For example, the electronic device stores the image in the first buffer by doubling the width of the right image being the first image of the graphic image and halving the height of the right image as shown in FIG. 12B according to resolution of the electronic device.

In step 1109, the electronic device alternately arranges the first image and the second image stored in the first buffer, based on a predetermined reference unit and stores the images in the second buffer. For example, when recognizing the width of the first buffer in half as shown in FIG. 12B, the electronic alternately arranges the first image and the second image based on a reference unit 1201 and stores them in the second buffer as shown in FIG. 12C. Herein, the reference unit indicates the unit for alternately arranging the first image and the second image for the stereoscopic image. Data stored in the second buffer is referred to as the stereoscopic image.

In step 1111, the electronic device outputs the stereoscopic image stored in the second buffer, to the display 170.

Next, the electronic device finishes this process for formatting the stereoscopic image.

In this exemplary embodiment, the electronic device resizes and stores the first image in the first buffer in steps 1101 and 1103, and then resizes and stores the second image in the first buffer in steps 1105 and 1107. Alternatively, the electronic device may resize and store the first image and the second image in the first buffer in parallel.

Before rotating and storing the first image and the second image in the first buffer, the electronic device can resize the first image and the second image by considering the resolution of the display 170 which displays the stereoscopic image. For example, the electronic device resizes the graphic image by taking into account the resolution of the display 170 for displaying the stereoscopic image. In so doing, the electronic device may resize the first image and the second image of the graphic image. Next, the electronic device can rotate and store the resized first image and second image in the first buffer.

Now, constructions for formatting the interlaced stereoscopic image in the electronic device are elucidated.

FIGS. 12A, 12B, and 12C depict the interlaced LR stereoscopic image formatted using LR graphic image according to another exemplary embodiment of the present invention.

It is assumed that the data storage 111 of the memory 110 includes the graphic image sequentially including the left image L and the right image R side by side as shown in FIG. 12A. Herein, the graphic image sequentially including the left image L and the right image R side by side is referred to as the LR graphic image.

To format the LR stereoscopic image using the LR graphic image, the electronic device extracts the left image from the graphic image and stores the extracted image in the first buffer by doubling the width and halving the height of the left image as shown in FIG. 12B. Next, the electronic device extracts the right image from the graphic image and stores the extracted image in the first buffer by doubling the width and halving the height of the right image as shown in FIG. 12B.

When recognizing the width of the first buffer in half, the electronic device alternately arranges the left image and the right image based on the reference unit 1201 as shown in FIG. 12C and thus formats the LR stereoscopic image.

In this exemplary embodiment, the electronic device formats the LR stereoscopic image using the graphic image sequentially including the left image and the right image side by side.

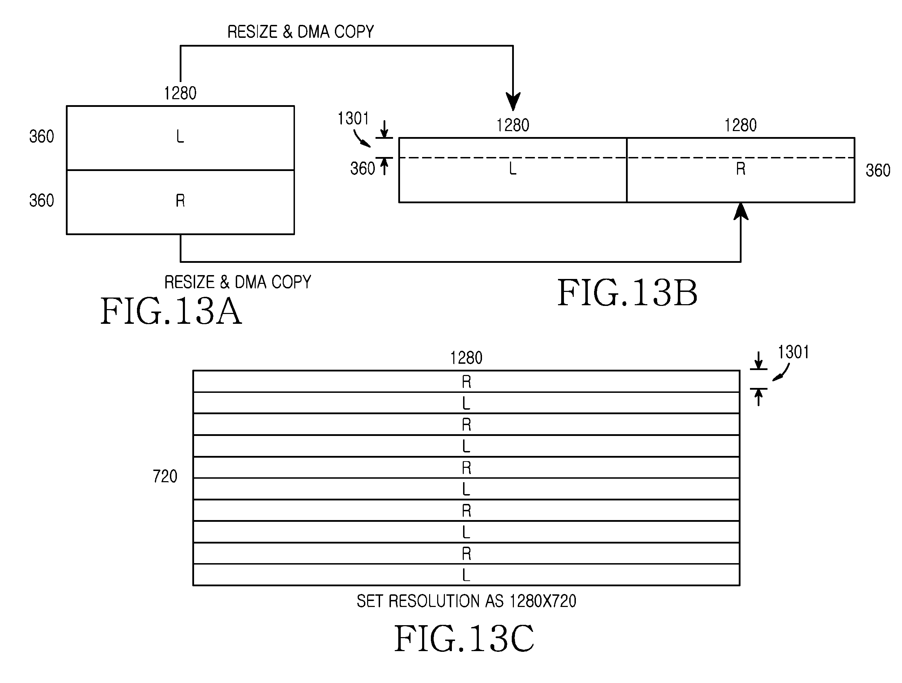

Alternatively, the electronic device may format the LR stereoscopic image using the graphic image sequentially including the left image and the right image between top and bottom as shown in FIGS. 13A, 13B, and 13C.

FIGS. 13A, 13B, and 13C illustrate an interlaced LR stereoscopic image formatted using the LR graphic image according to another exemplary embodiment of the present invention.

It is assumed that the data storage 111 of the memory 110 includes the graphic image sequentially including the left image L and the right image R between top and bottom as shown in FIG. 13A. Herein, the graphic image sequentially including the left image L and the right image R between top and bottom is referred to as the LR graphic image.

To format the LR stereoscopic image using the LR graphic image, the electronic device extracts the left image from the graphic image and stores the extracted image in the first buffer by doubling the width and halving the height of the left image as shown in FIG. 13B. Next, the electronic device extracts the right image from the graphic image and stores the extracted image in the first buffer by doubling the width and halving the height of the right image as shown in FIG. 13B.

When recognizing the width of the first buffer in half, the electronic device alternately arranges the left image and the right image in the first buffer based on a reference unit 1301 as shown in FIG. 13C and thus formats the LR stereoscopic image.

In this another exemplary embodiment, the electronic device formats the LR stereoscopic image using the LR graphic image.

Alternatively, the electronic device may format the RL stereoscopic image using the RL graphic image in FIGS. 14A, 14B, and 14C.

FIGS. 14A, 14B, and 14C illustrate an interlaced RL stereoscopic image formatted using the RL graphic image according to one exemplary embodiment of the present invention.

It is assumed that the data storage 111 of the memory 110 includes the graphic image sequentially including the right image R and the left image L side by side as shown in FIG. 14A. Herein, the graphic image sequentially including the right image R and the left image L side by side is referred to as the RL graphic image.

To format the RL stereoscopic image using the RL graphic image, the electronic device extracts the right image from the graphic image and stores the extracted image in the first buffer by doubling the width and halving the height of the right image as shown in FIG. 14B. Next, the electronic device extracts the left image from the graphic image and stores the extracted image in the first buffer by doubling the width and halving the height of the left image as shown in FIG. 14B.

When recognizing the width of the first buffer in half, the electronic device alternately arranges the right image and the left image in the first buffer based on a reference unit 1401 as shown in FIG. 14C and thus formats the RL stereoscopic image.

In this exemplary embodiment, the electronic device formats the RL stereoscopic image using the graphic image sequentially including the right image and the left image side by side.

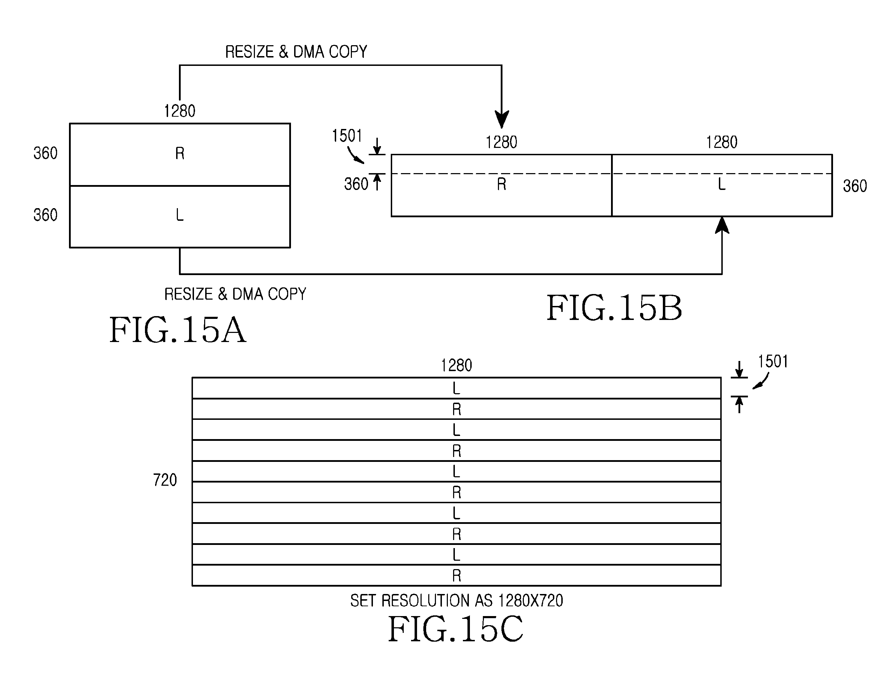

Alternatively, the electronic device may format the RL stereoscopic image using the graphic image sequentially including the right image and the left image between top and bottom as shown in FIGS. 15A, 15B, and 15C.

FIGS. 15A, 15B, and 15C illustrate an interlaced RL stereoscopic image formatted using the RL graphic image according to another exemplary embodiment of the present invention.

It is assumed that the data storage 111 of the memory 110 includes the graphic image sequentially including the right image R and the left image L between top and bottom as shown in FIG. 15A. Herein, the graphic image sequentially including the right image R and the left image L between top and bottom is referred to as the RL graphic image.

To format the RL stereoscopic image using the RL graphic image, the electronic device extracts the right image from the graphic image and stores the extracted image in the first buffer by doubling the width and halving the height of the right image as shown in FIG. 15B. Next, the electronic device extracts the left image from the graphic image and stores the extracted image in the first buffer by doubling the width and halving the height of the left image as shown in FIG. 15B.

When recognizing the width of the first buffer in half, the electronic device alternately arranges the left image and the right image in the first buffer based on the reference unit 1501 as shown in FIG. 15C and thus formats the RL stereoscopic image.

In this another exemplary embodiment, the electronic device formats the RL stereoscopic image using the RL graphic image.

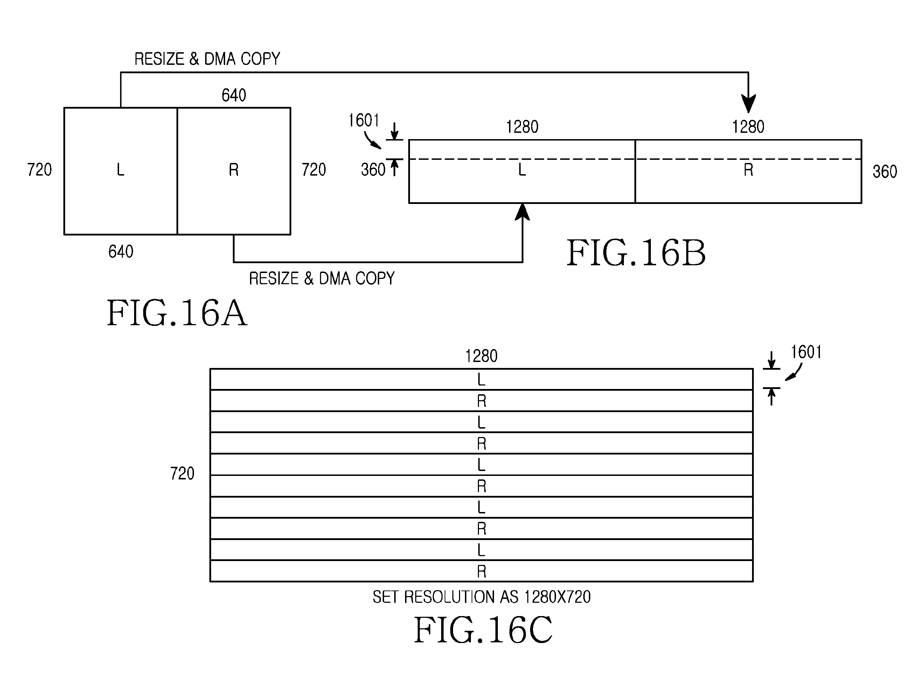

Alternatively, the electronic device may format the RL stereoscopic image using the LR graphic image in FIGS. 16A, 16B, and 16C.

FIGS. 16A, 16B, and 16C illustrate an interlaced RL stereoscopic image formatted using the LR graphic image according to another exemplary embodiment of the present invention.

It is assumed that the data storage 111 of the memory 110 includes the graphic image sequentially including the left image L and the right image R side by side as shown in FIG. 16A. Herein, the graphic image sequentially including the left image L and the right image R side by side is referred to as the LR graphic image.

To format the RL stereoscopic image using the LR graphic image, the electronic device extracts the right image from the graphic image and stores the extracted image in the first buffer by doubling the width and halving the height of the right image as shown in FIG. 16B. Next, the electronic device extracts the left image from the graphic image and stores the extracted image in the first buffer by doubling the width and halving the height of the left image as shown in FIG. 16B.

When recognizing the width of the first buffer in half, the electronic device alternately arranges the right image and the left image in the first buffer based on a reference unit 1601 as shown in FIG. 16C and thus formats the RL stereoscopic image.

In this exemplary embodiment, the electronic device formats the RL stereoscopic image using the graphic image sequentially including the left image and the right image side by side.

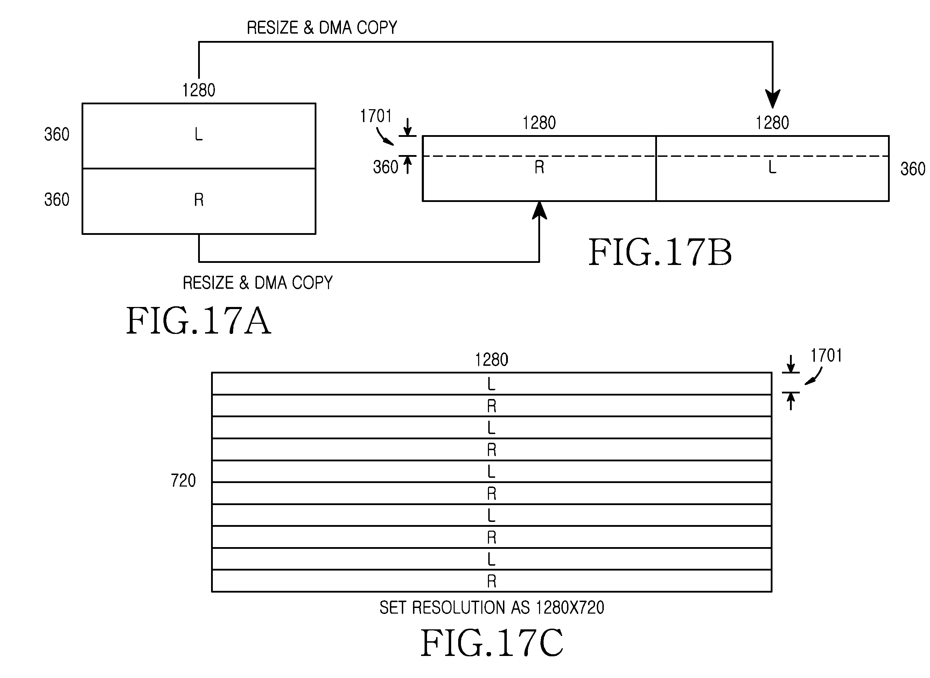

Alternatively, the electronic device may format the RL stereoscopic image using the graphic image sequentially including the left image and the right image between top and bottom as shown in FIGS. 17A, 17B, and 17C.

FIGS. 17A, 17B, and 17C illustrate an interlaced RL stereoscopic image formatted using the LR graphic image according to another exemplary embodiment of the present invention.

It is assumed that the data storage 111 of the memory 110 includes the graphic image sequentially including the left image L and the right image R between top and bottom as shown in FIG. 17A. Herein, the graphic image sequentially including the left image L and the right image R between top and bottom is referred to as the LR graphic image.

To format the RL stereoscopic image using the LR graphic image, the electronic device extracts the right image from the graphic image and stores the extracted image in the first buffer by doubling the width and halving the height of the right image as shown in FIG. 17B. Next, the electronic device extracts the left image from the graphic image and stores the extracted image in the first buffer by doubling the width and halving the height of the left image as shown in FIG. 17B.

When recognizing the width of the first buffer in half, the electronic device alternately arranges the right image and the left image in the first buffer based on the reference unit 1701 as shown in FIG. 17C and thus formats the RL stereoscopic image.

In this another exemplary embodiment, the electronic device formats the RL stereoscopic image using the LR graphic image.

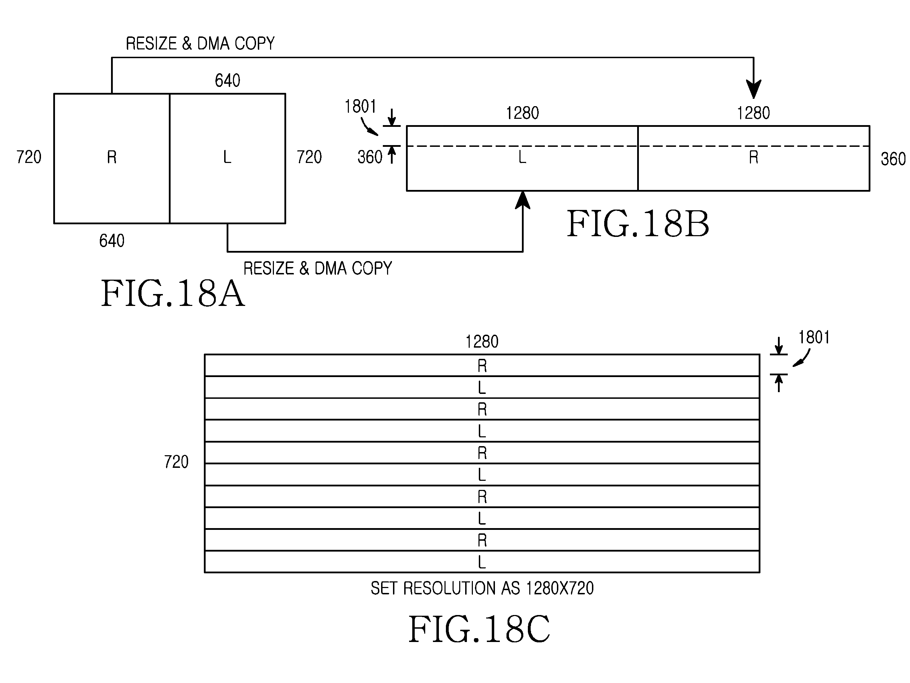

Alternatively, the electronic device may format the LR stereoscopic image using the RL graphic image in FIGS. 18A, 18B, and 18C.

FIGS. 18A, 18B, and 18C illustrate an interlaced LR stereoscopic image formatted using the RL graphic image according to another exemplary embodiment of the present invention.

It is assumed that the data storage 111 of the memory 110 includes the graphic image sequentially including the right image R and the left image L side by side as shown in FIG. 18A. Herein, the graphic image sequentially including the right image R and the left image L side by side is referred to as the RL graphic image.

To format the LR stereoscopic image using the RL graphic image, the electronic device extracts the left image from the graphic image and stores the extracted image in the first buffer by doubling the width and halving the height of the left image as shown in FIG. 18B. Next, the electronic device extracts the right image from the graphic image and stores the extracted image in the first buffer by doubling the width and halving the height of the right image as shown in FIG. 18B.

When recognizing the width of the first buffer in half, the electronic device alternately arranges the left image and the right image in the first buffer based on a reference unit 1801 as shown in FIG. 18C and thus formats the LR stereoscopic image.

In this exemplary embodiment, the electronic device formats the LR stereoscopic image using the graphic image sequentially including the right image and the left image side by side.

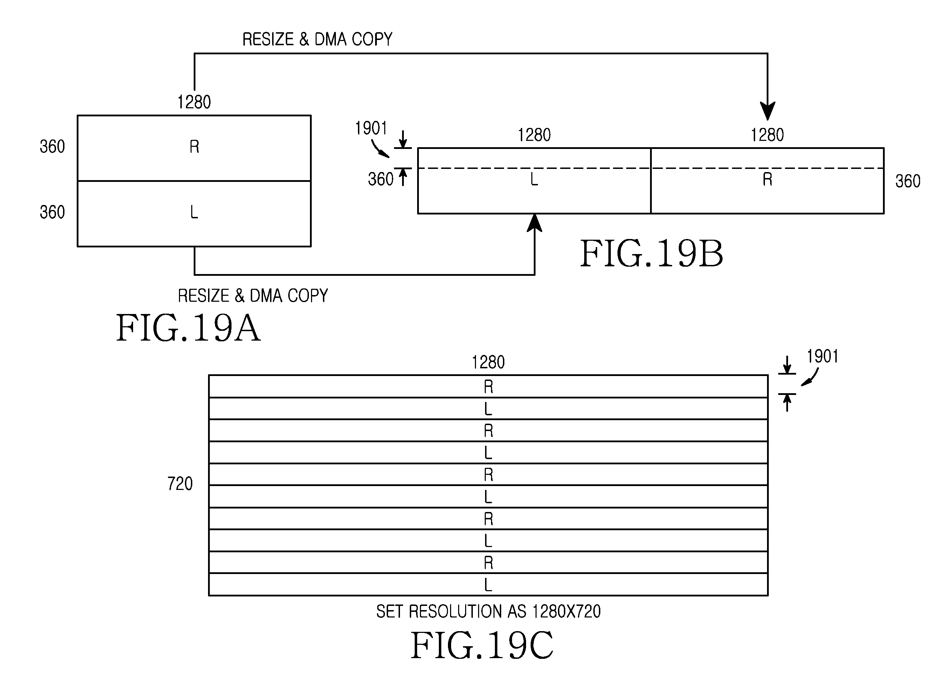

Alternatively, the electronic device may format the LR stereoscopic image using the graphic image sequentially including the right image and the left image between top and bottom as shown in FIGS. 19A, 19B, and 19C.

FIGS. 19A, 19B, and 19C illustrate an interlaced LR stereoscopic image formatted using the RL graphic image according to another exemplary embodiment of the present invention.

It is assumed that the data storage 111 of the memory 110 includes the graphic image sequentially including the right image R and the left image L between top and bottom as shown in FIG. 19A. Herein, the graphic image sequentially including the right image R and the left image L between top and bottom is referred to as the RL graphic image.

To format the LR stereoscopic image using the RL graphic image, the electronic device extracts the left image from the graphic image and stores the extracted image in the first buffer by doubling the width and halving the height of the left image as shown in FIG. 19B. Next, the electronic device extracts the right image from the graphic image and stores the extracted image in the first buffer by doubling the width and halving the height of the right image as shown in FIG. 19.

When recognizing the width of the first buffer in half, the electronic device alternately arranges the left image and the right image in the first buffer based on a reference unit 1901 as shown in FIG. 19C and thus formats the LR stereoscopic image.

As set forth above, the electronic device can format the stereoscopic image without the need for a separate hardware module which incurs an additional cost and an additional mounting space.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for formatting a stereoscopic image in an electronic device, comprising:
rotating a left image and a right image of a image data by a first rotation amount for storage in a first buffer;
alternately arranging a portion of the left image and the right image stored in the first buffer according to a predetermined reference size; and
formatting the stereoscopic image by rotating the alternately arranged left image and the right image by a second rotation amount.

2. The method of claim 1, wherein the formatting of the stereoscopic image comprises:
rotating the alternatively arranged left image and the right image from the first buffer by 90° clockwise.

3. The method of claim 1, further comprising:
before storing the left and right images in the first buffer, resizing the left and right images by considering a size of a display region.

4. A method for formatting a stereoscopic image in an electronic device, comprising:
resizing and storing a left image and a right image of a image data in a first buffer; and
formatting the stereoscopic image by alternately arranging a portion of the resized left image and the right image stored in the first buffer according to a predetermined reference size.

5. The method of claim 4, wherein the storing of the resized images in the first buffer comprises:
storing the left and right images in the first buffer by doubling a width and halving a height of the left image and the right image.

6. The method of claim 4, further comprising:
before storing the left and right images in the first buffer, resizing the left and right images by considering a size of a display region.

7. An electronic device comprising:
one or more processor;
a memory, and
one or more program stored in the memory and configured to be executed by the one or more processors,
wherein the one or more program includes instructions for:
rotating a left image and a right image of a image data by a first rotation amount for storage in a first buffer;
alternately arranging a portion of the left image and the right image stored in the first buffer according to a predetermined reference size; and
formatting a stereoscopic image by rotating the alternately arranged left image and the right image by a second rotation amount.

8. The method of claim 1 or the electronic device of claim 7, wherein the rotated first and second the images in the first buffer are rotated by 270° clockwise.

9. The electronic device of claim 7, wherein the formatting of the stereoscopic image in the first buffer comprises an instruction for rotating the alternatively arranged left image and the right image from the first buffer by 90° clockwise.

10. The electronic device of claim 7, further comprising:
an instruction for resizing the left and right images by considering a size of a display region prior to storing the left and right images in the first buffer.

11. The method of claim 1 or the electronic device of claim 7, further comprising:
extracting the first and second images from the image data prior to rotation.

12. An electronic device comprising:
one or more processor;
a memory, and
one or more program stored in the memory and configured to be executed by the one or more processors,
wherein the one or more program includes instructions for:
resizing and storing a left image and a right image of a image data in a first buffer; and
formatting a stereoscopic image by alternately arranging a portion of the resized left image and the right image stored in the first buffer according to a predetermined reference size.

13. The electronic device of claim 12, wherein the instruction for storing of the resized images in the first buffer comprises an instruction for storing the resized images in the first buffer by doubling a width and halving a height of the left image and the right image.

14. The electronic device of claim 12, further comprising:
an instruction for resizing the left and right images by considering a size of a display region prior to storing the left and right images in the first buffer.

15. The method of claim lor 4 or the electronic device of claim 7 or 11, further comprising:
storing the formatted stereoscopic image in a second buffer.
